# EUROPEAN PATENT APPLICATION

(11) **EP 0 937 959 A1**
(43) Date of publication of application: **25.08.1999**
(21) Application number: 98103067.9
(22) Date of filing: 21.02.1998
(51) Int. Cl.: F41H 7/02, B60F 3/00

(54) **Amphibious armoured vehicle**

(71) Applicant: VXO Group International AG, 9490 Vaduz (LI)
(72) Inventor: Rantala, Klaus, 23500 Uusikaupunki (FI)
(74) Representative: Kaminski, Susanne, Dr.

(57) **Abstract**

A multi-axle armored vehicle comprising a unitized hull (2) constructed from armor plate. Said hull comprises an upper part with oblique side walls (17a,17b) and a hull shell (11) with a box-like portion, whereby the hull shell (11) comprises a further V-like portion, which essentially forms the lower part of a front nose-portion. The box-like portion is located in the rearward part of the hull (2). The front side flanks (12) formed from the V-like portion are located inwardly to the horizontal at an angle of 45° to 75°, especially of 60°. The hull (2) is lined inside with an aramid fibre layer (70). The armor plate is a sandwich of a ceramic layer (26) between two steel plates (25a,25b). The armour plates are joined in the form of groove-and-tongue joints and welded together.

## Description

The invention refers to an armored vehicle according to the preamble of claim 1.

The development of armored vehicles - as for example described in Rolf Hilmes "Kampfpanzer, Die Entwicklungen der Nachkriegszeit", or Richard M. Ogorkiewicz "Technology of Tanks" - is essentially concerned with various interdependent system features, such as firing power, mobility and the ability to survive under fire. The main task of a combat armored vehicle is tactically to destroy the armored vehicle of the enemy, i.e. the firing power. The system features mobility and the ability to survive under fire cannot be disassociated from this aspect, for they clearly influence the tactical operational potential. The ability of tanks is to a large extent governed by the ability to survive under fire. Both criteria survival and mobility appear to be contradictory, an increase in protection generally implying an increase in weight. However, in recent years in particular it has become apparent that the combat strength of an armored vehicle is increased by improved ballistic protection. Mobility and protection must be regarded as equally important aspects.

Various factors govern the design of the hull, whereby the requisites with respect to all-round protection, rigidity and mobility and the available space must be taken into consideration. Improved flank protection can be achieved through suitable shaping of the hull, better protection from mines involves the particularly weak point resulting from the welded seams between the hull floor and the side walls. There is also the danger of a large area of the hull floor being severely compressed from mine explosion.

The aim of the invention is to provide an armored vehicle whose hull meets the complex demands regarding protection and stability with respect to warping and also regarding sufficient space and mobility.

This is achieved by the characteristic features of claim 1. Advantageous and alternative embodiments are described by the features of the dependent claims.

In the following, the invention is purely exemplarily described based on the drawings, showing in
- Fig.1a and 1b: a drawing in perspective and side view of a half-tracked armored vehicle;
- Fig.2: a schematic side view of a hull;
- Fig.3a: a section through a hull of an armored vehicle corresponding to A-A of Fig. 2;
- Fig.3b: a section through a hull of an armored vehicle corresponding to B-B of Fig. 2;
- Fig.3c: a section through a hull of an armored vehicle corresponding to C-C of Fig. 2;
- Fig.4a: a section through a hull of an armored vehicle corresponding to X-X of Fig. 1b;
- Fig.4b: a section through a hull of an armored vehicle corresponding to Y-Y of Fig. 1b;
- Fig.4c: a section through a hull of an armored vehicle corresponding to Z-Z of Fig. 1b;
- Fig.5a: a section of an edge between hull and cover according to detail I in Fig. 3a, to which;
- Fig.5b: shows a topview diagram;
- Fig.5c: a variant according to Fig. 5a;
- Fig.5d: a section through a plate of the hull presenting a possible construction;
- Fig.5e: a section through a side flank portion with wheel axle attached thereto;
- Fig.6: a schematic drawing of the location of the drive when the armored vehicle is used as an amphibian vehicle.
- Fig.7a and 7b: a partial view of an armored vehicle from above and a corresponding detailed section along L-L;
- Fig.8a and 8b: cross-sections corresponding to M-M and N-N of Fig. 7a;
- Fig.9: a view of the rear of the armored vehicle and
- Fig.10: a section through a fuel filling tube.

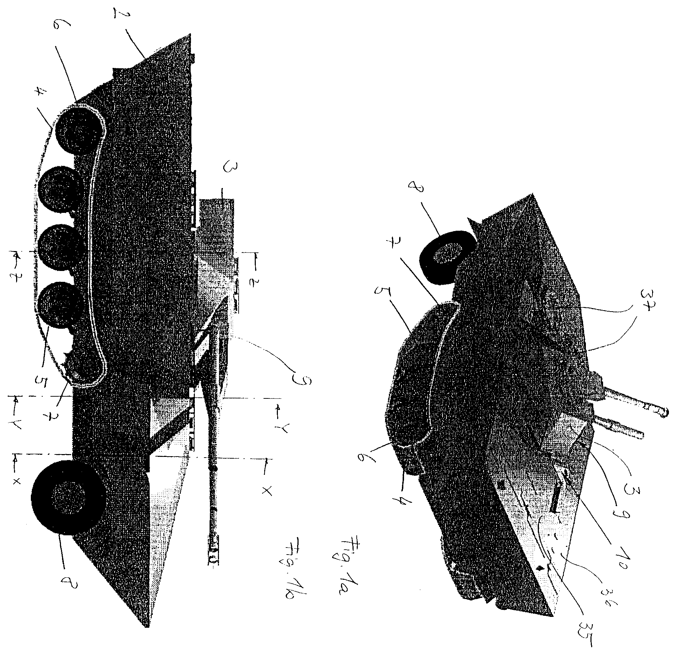

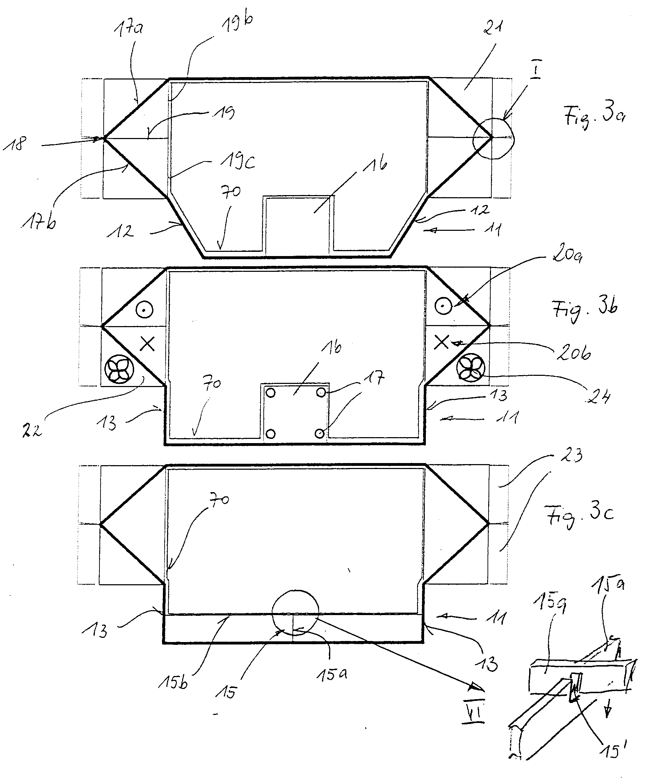

Fig. 1a and 1b show a half-tracked armored vehicle 1 with its hull 2 and a turret 3 supporting the firearm. Tracks 4 each run around three road wheels 5, an idler wheel 6 and a sprocket drive 7. A steerable front pair of wheels 8 is located at the front of the hull 2. Here the turret 3 is constructed rather as a flat turntable. The crew can be accommodated low-lying and compactly inside the hull 2. This provides an especially compact combat space for the crew, the ability of the crew to survive under fire is improved thanks to their being able to be positioned in the central part of the hull 2; access doors 35 for the crew, which can be accommodated in the back area of the armored vehicle 1, are located at the rear. This makes for a possible retreat under fire protection. Loading hatches 36 for storage containers 21 (see Fig. 3a to 3c) are located in the side areas, two entrance hatches 37 for the driver and the radio operator and a further one for the gunner are located at the front of the armored vehicle 1 and on the turret 3, respectively.

The engine is located at the front; the tractive effort of the engine is transmitted to a gear unit via a main shaft, which drives the sprockets 7. The power pack located at the front of the hull 2 contributes to the protection of the crew against the most likely direction of attack. As also the turret has a very small frontal area, the chances of it being hit hull-down positions are reduced. The front pair of wheels 8 is driven by the gear unit via a transmission device. The hull 2 is if necessary constructed as a floatable body. In this case, additional hydraulic propeller drives are provided (see below), the end of whose channel can be seen at the rear in Fig. 1a and 1b.

The location of the engine at the front makes it possible to locate most of the ammunition at the rear of the hull 2, where it is least vulnerable to direct fire.

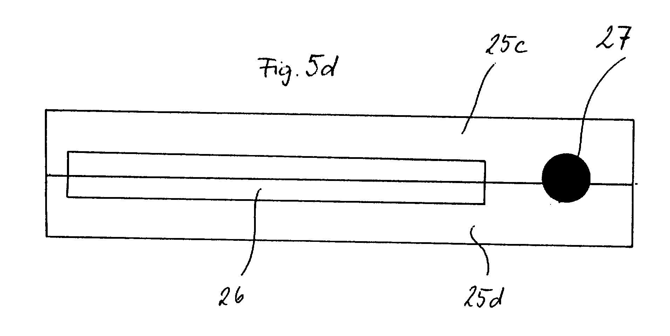

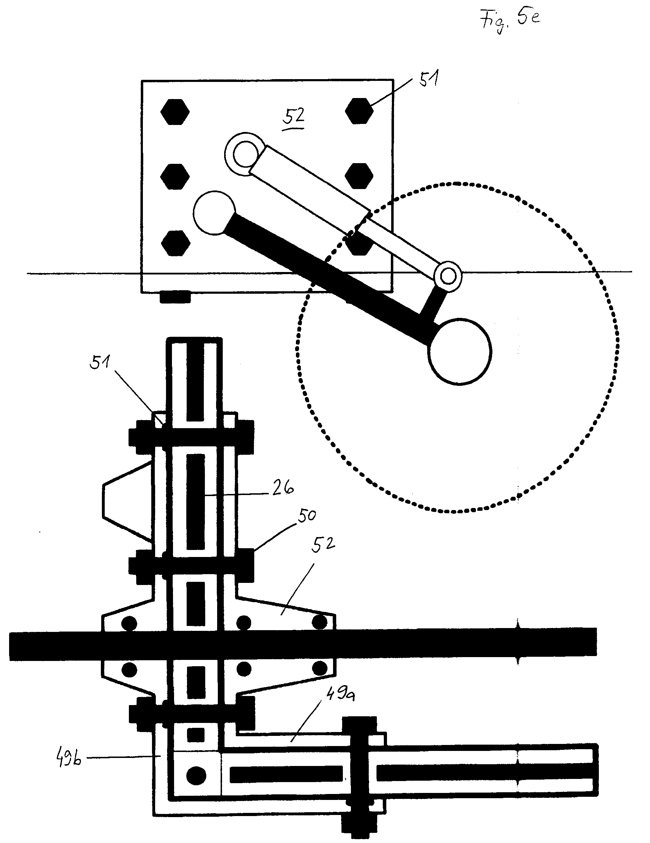

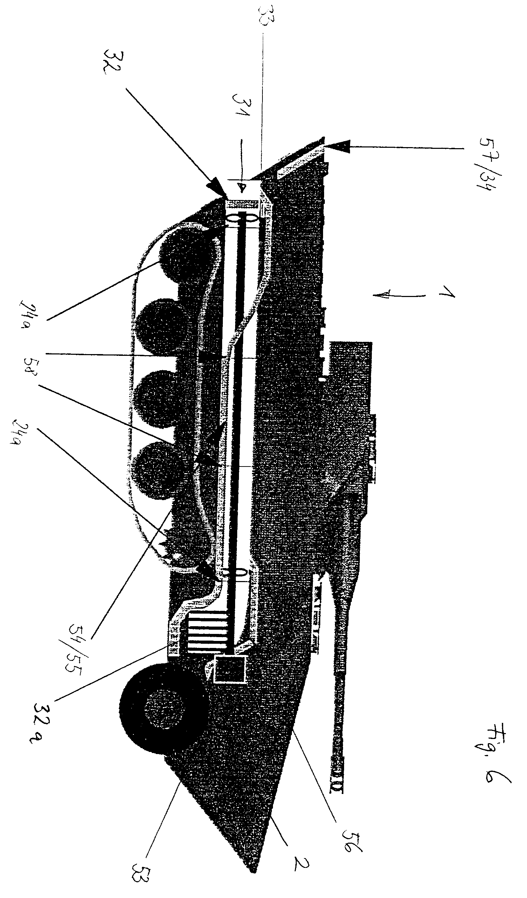

Air is sucked in via an air inlet port 9 both for cooling the engine, the torque converter and other relevamt components such as gears, air charge and fuel, as well as combustion air for the engine. The air inlet port 9 is located on top of the hull 2, i.e. in a zone with a relatively low amount of dust. The air outlet port 10 is also located on top of the hull 2. This is described further below in more detail based on Fig. 7a, 7b, 8a and 8b.

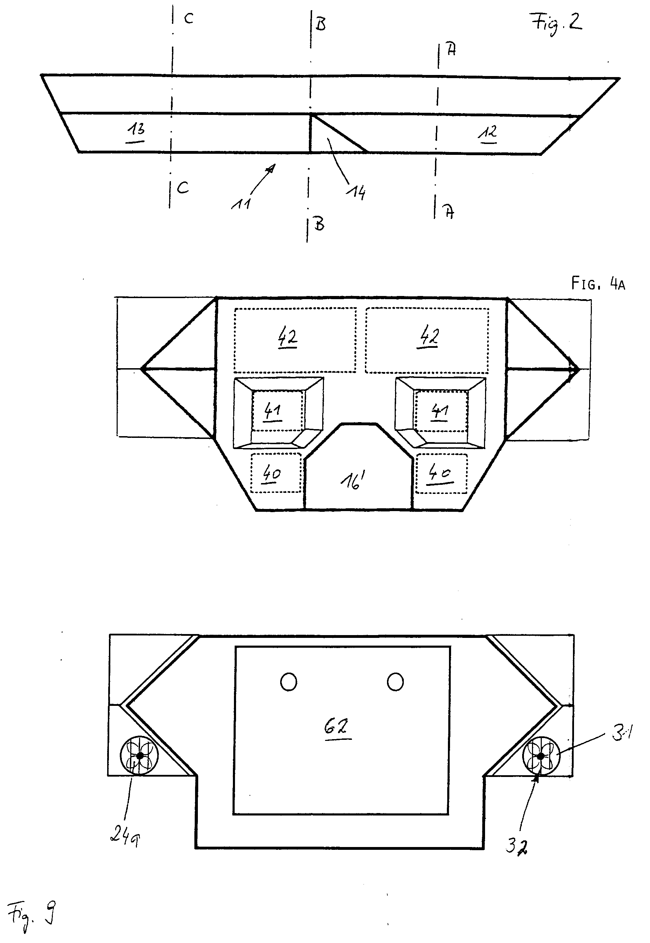

The special shape of the hull 2 can be seen in figures 2 and 3a to 3c, whereby Fig. 2 shows a side view of only the lower part of the hull 2, the hull shell 11.

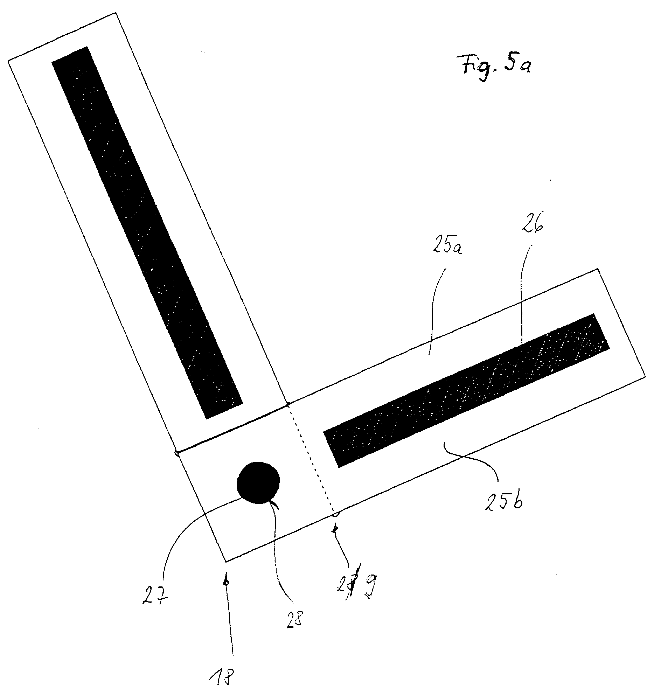

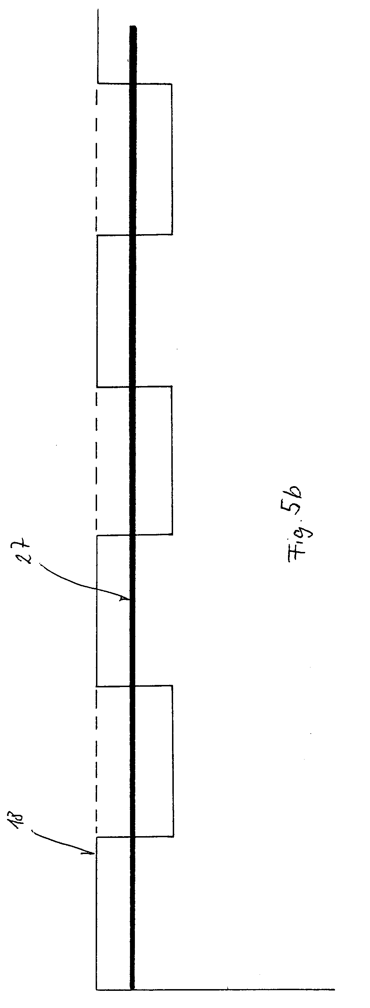

The sections corresponding to A-A, B-B and C-C of Fig. 2 presented in figures 3a to 3c give a clearer picture of the difference in shape of the hull shell 11 at the front and the rear of the armored vehicle 1. At the front (Fig. 3a), the front side flanks 12 of the hull shell 11 slope at an angle of about 60° to the horizontal, whilst the rear side flanks 13 (Fig. 3b and 3c) are vertical. A triangular, also oblique side flank portion 14 is provided as a transition (Fig. 2) between these two areas. This construction - together with the oblique front portion as also shown in Fig. 1b - offers increased protection to that area which statistically is especially under strong fire - as more than 45% of all attacks occur within a front angle of 60°. The reason is that with oblique armored plate designs most projectiles ricochet or shatter. Even in the case of hollow charge projectiles the path of penetration is longer, albeit the effect in the latter case - for simple plates - is limited especially to a possible destabilisation upon striking on the plate surface. As presented further below based on Figs. 5a to 5e, the dynamic stability upon striking of projectiles - also of hollow charges - can be increased by additionally using sandwich armored plates.

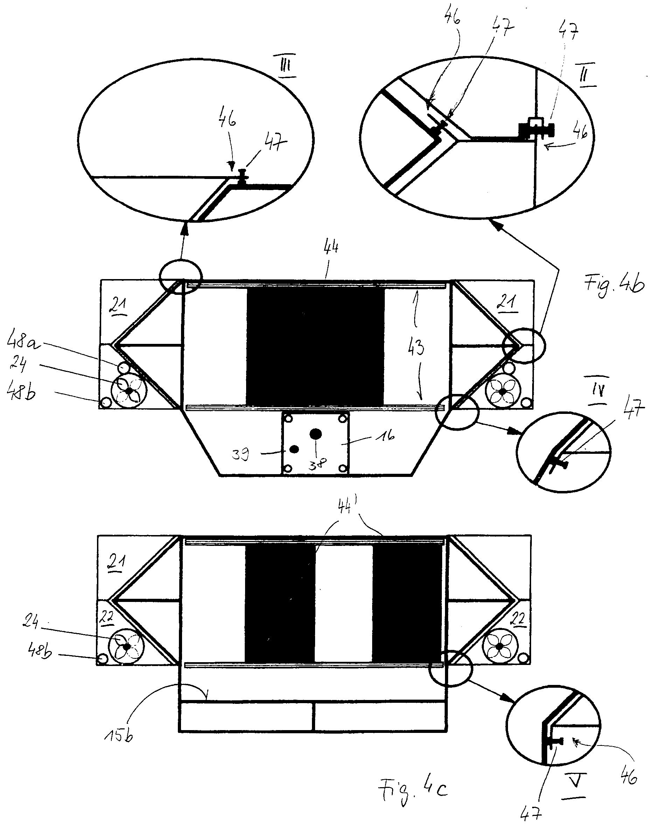

However, at the rear (Fig. 3b and 3c), which based on the box-shaped hull offers sufficient space for accommodating the crew, equipment and if necessary ammunition, a further support system 15 is provided (Fig. 3c) including dividing 15a and cover walls 15b. From the point of view of increased stability, dividing walls 15a forming chambers - as presented in detail VI - can be constructed from plates fitted into one another with opposing recesses 15', which are then welded together. This results in reinforcement of the floor structure. A specially constructed suspension for the sprocket 7 and the road wheels 5 (Fig. 1a, 1b) can be located within the support system 15. Such a suspension is described in the application with the title "Vehicle" submitted by the same applicant on the same day. A sort of tunnel 16 (Fig. 3a, 3b and Fig. 4b), which in itself strengthens the hull 2, is provided for the main shaft 38 and front axle 39. Moreover, frame structures 17 can be provided as further reinforcement.

For improved protection - as described above - the upper part of the hull 2 has side wall portions 17a and 17b inclined to one another with a common edge 18. By erecting frame structures 19a, 19b, 19c, the cavity formed between these side walls results on the one hand in a reinforcement and on the other hand offers a space for accommodating air ducts 20a, 20b (Fig. 3a, 3b and in detail Fig. 7a, 7b, 8a and 8b) or material (Fig. 3c).

The hull 2 is lined inside with a layer of material 75 having a high expansion resistance with high strength and ductility, such as for example aramid fibre known under the trade name Kevlar® ; its temperature resistance is also very high - depending on the composition this can be between 370°C and 550°C. Splinters from fire strikes or penetration can thus be held back.

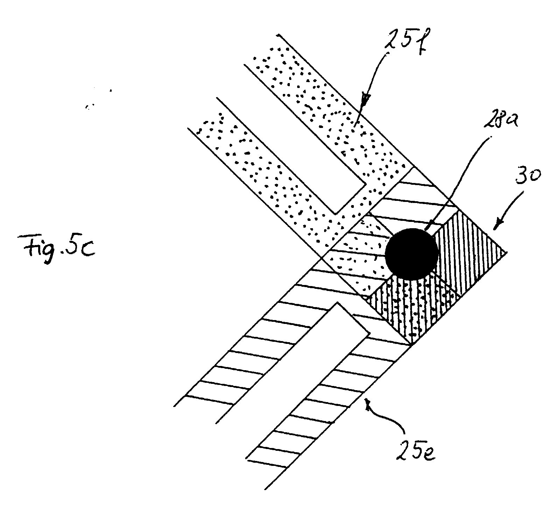

Further components, having a double effect, are to be installed around these side wall portions 17a, 17b. By locating the storage containers 21 towards the front, the protection factor is increased, since hollow charge projectiles detonate upon striking the outer shell and the side wall is constructed as an armored protection wall. Casings 22 are located on both sides in the lower part of the side wall portions 17b to accommodate the propeller shafts 24 and water jets to propel the armored vehicle 1 in water (described in detail based on Fig. 6).

On both side walls of the hull 2 two or more hollow containers 23 are mounted in order to improve the buoyancy of the armored vehicle.

Fig. 4a to 4c present sections corresponding to X-X, Y-Y and Z-Z of Fig. 1b and show the division of the hull 2 into three bulkheads. The hull has armored bulkheads between the engine compartment and the combat compartment. The normally closed bulkheads may be partially opened for engine or transmission maintenance purposes during service. Hull reinforcing bulkheads are located one ahead of turret rim and air intake airducts and another behind turret rim and airduct outlets. These two bulkheads allow crew members to pass through via sliding doors.

Fig. 4a shows a view of the first bulkhead, located directly behind the engine compartment. Next to the recess 16' for the gears, maintenance doors 40 are provided to enable access to the machine area for maintenance purposes. The seats 41 for the commander, driver and radio operator are located in the inner area - and hence relatively protected. Further doors 42 are located in the upper area for maintenance and control purposes. The level of the lower dividing wall is determined here by the seat depth of the seats 41, and in this bulkhead is lower than in the next bulkhead shown in Fig. 4b.

Fig. 4b shows a section corresponding to Y-Y of Fig. 1b and constitutes a further bulkhead. A sliding door 44, if need be double-doored, sliding along rails 43 separates this bulkhead from the next bulkhead. A section (corresponding to Z-Z of Fig. 1b) of this is shown in Fig. 4c. Here again sliding doors 44' are provided separating the rear area. If need be, in this rear area the crew (for example up to 8 men) can be accommodated, ammunition can be stored or - as described further below - a water tank can be located. Here, the floor level is particularly low; between the lower floor level 15b and the rear area, a free space can be provided, through which fuel tanks 45, which are for safety reasons located as centrally as possible - if necessary mounted on rails - can be pushed, in order in this way to enable direct access to the suspension of the road wheels (see also Fig. 8a).

Based on the details II, III, IV and V of Fig. 4b and 4c, possible connections between the storage containers 21 and the hull walls are shown, which enable the exchange of single storage containers 21 in the event of striking projectiles. The overlapping profile structure along the connection lines 46, the connection via bolts 47 and sealing along the connection lines 46 results - especially in combination with each other - on the one hand in sufficient sealing against water and on the other hand makes for modular exchange of single storage containers 21 and the casing 22. Within the casing 22, provided for accommodation of the propeller shafts 24, further vacuum pipes 48 and 48b are located, through which any water perhaps penetrating the casing 22 can be pumped away.

Fig. 5a to 5e show more details of the armored plates and how they can be joined together, for example at one of the edges 18 between the two side wall portions 17a and 17b of Fig. 3a to 3c.

Particularly in order to take the safety factor into account, the plates are designed as sandwich plates. An additional layer 26 of material having especially good dynamic stability is provided between the two armored steel layers 25a, 25b. Such materials include, for example, ceramics or silicates, which can buckle and also destroy striking projectiles. For example, bombarding tests have shown that thanks to the improved dynamic behaviour craters formed by the tip of hollow charge projectiles upon striking again close after the tip has passed through. The following particles hence do not increase the size of the channel caused by the projectile striking through.

From a production point of view, the edge formed between two plates is understandably particularly difficult and problematic with respect to the desired all-round protection. Fig. 5a shows that an armored steel bolt 27 along the edge 18 is used to reinforce this edge 18, whereby the plates with groove-and-tongue joints, as can be seen in Fig. 5b, have bore holes 28 to accommodate this bolt 27. The plates are joined together with welded seams 29.

Fig. 5c shows a similar construction as presented in Fig. 5a, which is easier to produce but requires more single components and more welding seams. Only half the side of the plates are finished around the free space 28a for accommodating the bolt. In a sort of L-shape, they are then overlapped and closed by means of a third part 30. For the sake of clarity, in Fig. 5c the three parts are presented in various ways: the plate layers 25e, 25f are wide shaded and dotted, the third part 30 is narrow shaded.

Another option is shown in Fig. 5d, in which the plates are formed from two half armored steel plates 25c, 25d with a layer 26 in between. This simplifies manufacture of the complex structure of such plates, but on the other hand - also the construction according to Fig. 5c - requires a great amount of welding work with long welding seams. In view of operating as an amphibian vehicle and the need for watertight conditions, a construction according to Fig. 5a is however to be given preference.

Fig. 5e shows an option to improve areas of the hull affected by extremely large forces. For this purpose - for example to fortify the bearing box 52 - angle brackets 49a, 49b can be connected to each other with screws 50 and hull plates located in between. Gasket rings 51 are provided to prevent penetration of water. At the openings for the screws 50 (the same is valid for the wheel axles), the plates should then be constructed from full armor steel; the layer 26, for example made of ceramics, is not used here.

Fig. 6 is a schematic drawing showing the location of the propeller shafts 24 and water jet channels 31 on both sides of the hull 2 for propelling the armored vehicle 1 in water. This location on the outside of the armored hull 2 is unusual, but it makes for improved conditions against flooding and sinking. A hydraulic drive 53 is provided for the propeller shafts 24, which are located in a channel 31 in the casing 22. At each end of the propeller shaft 24 there is a propeller 24a resulting in a correct, powerful positioning of the propeller 24a both for forward and backward movements.

At both ends of the channel 31, hydraulically controlled rudders 32 can be provided three on each side. However, the channel 31 - as shown in Fig. 6 - can be closed at least on one side by a grid 32a, whereby the position of rudders 32 and/or laminae of the grid(s) 32a can be adjusted by means of for instance hydraulic adjusting elements 33. Water penetrating the casing 22 is pumped away via a pipe 54 located in the channel 31 with additional vacuum bilge pump 55. A suitable pumping device 56 with vacuum pump and suction pipe is located so that any water penetrating the casing can be drawn off from its floor area. The casing 22 is supplied with air to improve buoyancy via an air intake tube 57 with back pressure valve 34. In order to improve the thrust, towards the rear of the armored vehicle the end area of the channel 31 is orientated somewhat upwardly, for example at approx. 20°. Water flowing through the channel 31 is thrown upward and the nose of the armored vehicle is pressed somewhat downwardly. Support structures 58 with watertight bearings for the propellor shaft 24 are provided in the channel 31.

The layout of the air circulation can be seen in Fig. 7a, 7b, 8a and 8b, whereby Fig. 7a shows a view from above on the area of the turret 3, Fig. 7b a section along L-L, Fig. 8a a section corresponding to M-M and Fig. 8b a section corresponding to N-N of Fig. 7a. The air sucked in via the air inlet port 9 provided with a grid is circulated through the air ducts 20a, 20b - if necessary after passing through an air filter 59 - and is expelled again through the air outlet ports 10. Meshed grids 60 can be provided at intervals in the air ducts 20a, 20b in order to catch the picked-up particles. In addition, hold-back baffle plates 61 can be provided on the floors of the air ducts 20a, 20b in order to prevent particles that have been deposited in air ducts 20a,20b from being pulled along by the air current.

Exhausts for the engine of the armored vehicle can also be provided in the rearward turret area, possibly in conjunction with the air outlet ports 10.

Fig. 8b shows the layout of the hull shell for accommodating three fuel tanks 45. The fuel tanks 45 made from manganese steel armour are provided with an explosion-proof inner structure and - as described above based on Fig. 4c - are movable, mounted on rails.

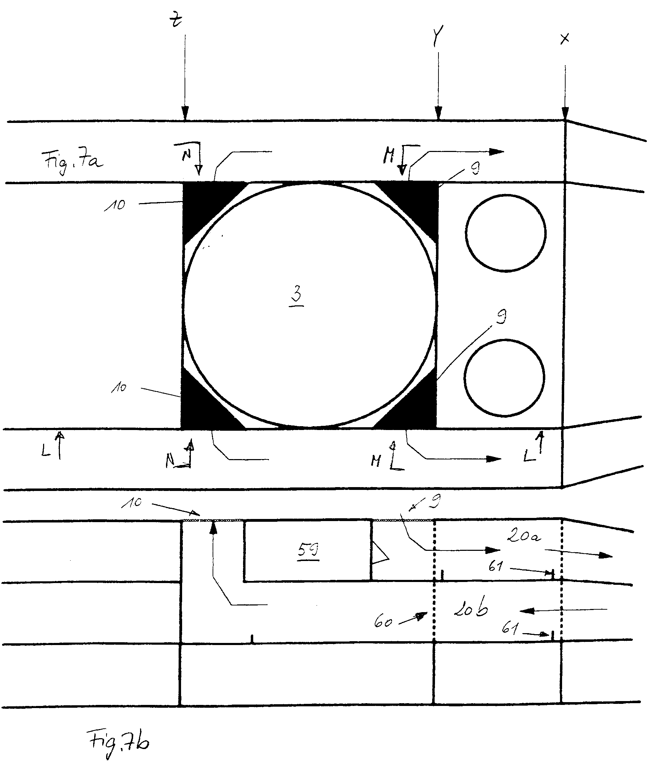

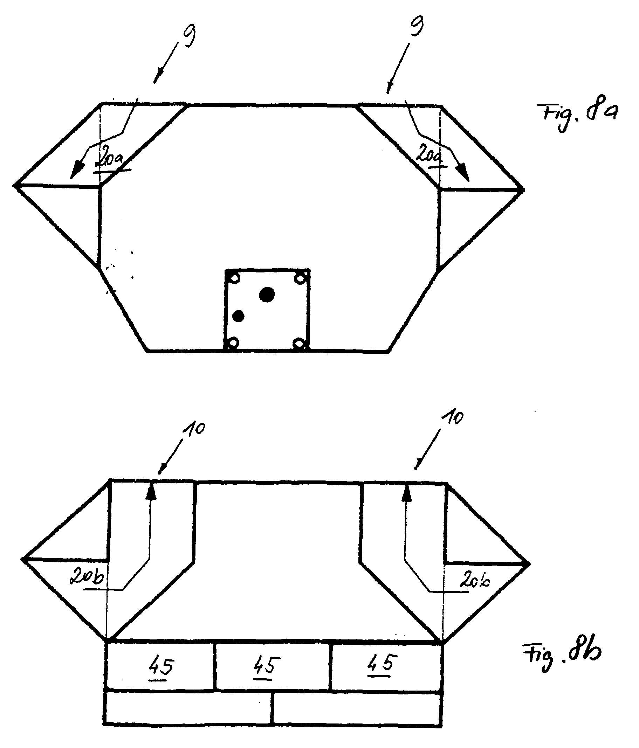

Fig. 9 shows a view of the rear of the armored vehicle. At the side, there are the channels 31 provided with the three hydraulically controlled rudders with the propellers 24a of the propeller shaft. The rear has a large loading and maintenance hatch 62, via which for example the fuel tanks 45 (Fig. 8b) can be pushed out.

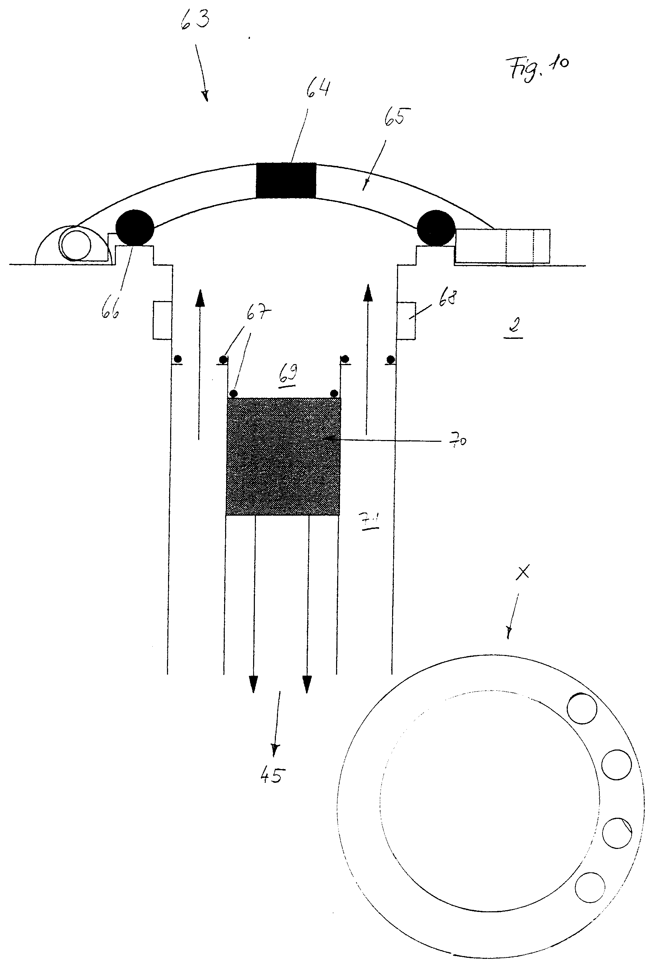

On the upper part of the hull 2, a tank filling port 63 is provided (Fig. 10), via which the fuel tank(s) 45 can be filled. This tank filling port 63 is covered with a lockable, armored cap 65 provided with a vent hole 64 having a filter. Gaskets 66, 67 are provided on the rim of the filling port, and the same inside the filling port, which is essentially formed as a double pipe. The fuel cock forming the counterpart (not shown) lies on this double pipe when the cap 65 is open, and is engaged in a round slot 68. When the sensors allotted to the slot 68 and the sealing points 67 register the contact of the fuel cock with the filler port, then fuel is sucked into the inner pipe 69 via a vacuum suction pump, whereby it passes through a filter 70, which for its part possibly comprises a sensor system for gas detection. The air sucked in from the inner pipe 69 is expelled via the outer pipe 71. The fuel cock is provided with recesses, as schematically shown in detail X. Mesh grids on the various air ports prevent the penetration of foreign particles. This set-up enables fast filling of the fuel tanks.

The design of an armored vehicle - essentially described above based on a tank - can also be advantageously applied for other service vehicles. For example, with just a few minor changes, the structure of such a vehicle can be employed for fire fighting for instance forest fires. The turret is then provided with a water canon, a water tank may be located in the area of the rearward bulkhead. The front drive wheels can be fitted with water-filled tyres, a water sprayer for cooling the tyres and/or the chassis can be located in the nose area. Heat insulation is ensured by the plate structure of the above-described vehicle.

## Claims

1. A multi-axle armored vehicle (1) comprising a unitized hull (2) constructed from armor plate, said hull (2) comprising an upper part with oblique side walls (17a, 17b) and a hull shell (11) with a box-like portion, characterized in that the hull shell further comprises a V-like portion, which essentially forms the lower part at a front nose-portion of the hull (2), whilst the box-like portion is located at the back of the hull.

2. A multi-axle armored vehicle (1) according to claim 1 characterized in that the front side flanks (12) formed from the V-like portion are located inwardly to the horizontal at an angle of 45° to 75°, especially of 60°.

3. A multi-axle armored vehicle (1) according to claim 2, characterized in that between the front side (12) flanks and between the rearwardly located side flanks (13) of the box-like portion inwardly and rearwardly tapering side flank portions (14) are provided.

4. A multi-axle armored vehicle (1)according to any of the preceding claims characterized in that each of the oblique side walls (17a, 17b) comprises two side wall portions, both constructed tapering, the upper side wall (17a) portion obliquely outwardly and the lower portion (17b) obliquely inwardly, and preferably, they should form an angle of about 90° to one another.

5. A multi-axle armored vehicle (1) according to any of the preceding claims characterized in that suspension means are provided for mounting the front axle (39) means in the area of the nose portion and for mounting rear axle means in the area of the box-shape portion, said suspension means comprising at least the following parts:
- a tunnel (16), if necessary with a further frame structure (17), for locating the power axle and
- a support system (15) with dividing wall (15a) for suspending for instance torsion bars and if need be a cover wall (15b) covering this support system (15).

6. A multi-axle armored vehicle (1) according to any of the preceding claims characterized in that the hull (2) is lined inside with an aramid fibre layer (75).

7. A multi-axle armored vehicle (1) according to any of the claims 4 through 6 characterized in that air ducts (20a, 20b) are located in the hollow space formed between the two side wall portions (17a,17b), and that air inlet and air outlet ports (9, 10) are provided on the upper part of the hull (2), especially in the rearward part.

8. A multi-axle armored vehicle (1) according to any of the preceding claims characterized in that in the upper part of the hull (2) components are provided at the side of the side walls, which if need be accommodate propeller shafts (24) and water jet channels (31) and/or are to be used as buoyancy aids in the form of hollow containers (23).

9. A multi-axle armored vehicle (1) according to any of the preceding claims characterized in that the armor plate is designed as sandwich plates (25a, 25b), whereby a highly dynamic strong layer (26), such as ceramic or silicate, is provided between the two armored steel plates, said sandwich plates (25a, 25b) being reinforced especially at the edges (18) of the hull (2) by means of a bolt (27) - preferably welded together.

10. A multi-axle armored vehicle (1) according to claim 9 characterized in that the sandwich plates (25a, 25b) are joined together in the form of groove-and-tongue joints - especially welded together.
